# EUROPEAN PATENT SPECIFICATION

(11) **EP 2 345 139 B1**
(45) Date of publication and mention of the grant of the patent: **01.05.2013**
(21) Application number: 09783643.1
(22) Date of filing: 01.10.2009
(51) Int. Cl.: H02K 23/36, E05F 15/10

(54) **DIRECT-CURRENT ELECTRIC MOTOR, PARTICULARLY FOR OPERATING AUTOMATIC SLIDING DOORS**
GLEICHSTROM-ELEKTROMOTOR, INSBESONDERE ZUM BETRIEB VON AUTOMATISCHEN SCHIEBETÜREN
MOTEUR ÉLECTRIQUE EN COURANT CONTINU, EN PARTICULIER POUR ACTIONNER DES PORTES COULISSANTES AUTOMATIQUES

(30) Priority: 02.10.2008 IT TV20080124
(43) Date of publication of application: 20.07.2011
(73) Proprietor: Ditec S.p.A., 20124 Milano (IT)
(72) Inventor: DE PIERI, Bruno, I-31032 Casale Sul Sile (IT); RONCAGLIA, Corrado, I-30030 Spinea (IT); BENETELLO, Simone, I-31022 Preganziol (IT); BOSCOLO, Edoardo, I-31032 Casale Sul Sile (IT)
(74) Representative: Modiano, Micaela Nadia
(86) International application number: PCT/EP2009/062753
(87) International publication number: WO 2010/037813

(56) References cited:
- EP-A- 1 193 843
- WO-A-01/91271
- JP-A- 8 047 228
- US-A- 5 102 306

## Description

### Technical Field

The present invention relates to a direct-current electric motor, particularly for operating automatic sliding doors.

### Background Art

Generally, applicable statutory provisions at the European level require, more or less restrictively, that an automation unit for sliding doors adapted to be installed along escape routes of a building must be "fail-safe".

More specifically, a single malfunction of the automation unit must not compromise in any way the correct opening of the door.

This means ensuring the opening of the passageway at the first anomaly of the system, be it mechanical or electronic.

Therefore, any malfunction, or more generally, any system error must be detected, within a certain time interval, by the electronic panel, so as to be able to act on the system in order to place it in a safe condition.

Manufacturers of automation units for automatic sliding doors are required to comply with these standards and have studied a series of constructive solutions to be applied to their products so as to make them conform with the described safety principles.

The background art related to these automation units installed and used on escape routes indicates the solutions currently used to ensure that in case of malfunction and/or emergency it is possible to ensure correct opening of the door wings in order to clear the passageway.

For example, among these known types of solution there is the so-called "breakaway" system.

In this solution, the wings (movable wing or movable + fixed wings) can be opened in case of emergency to allow the passage of the people leaving the building where the door is installed.

In case of emergency, in fact, pushing against the wing separates it from its fixing point and allows its rotation about a pivot that is fixed to the automation unit in order to clear the passageway.

This solution is provided with a control system that is capable of detecting the opening of the wings and interrupts the operation of the system until the normal operating condition is restored.

This type of solution has the disadvantage of comprising several components that affect considerably its production and assembly cost, making it in practice economically scarcely advantageous.

Another known type of solution is the so-called "elastic" system.

This second known type of solution has, in addition to the single gearmotor used during normal operation of the automation unit, an appropriately pretensioned elastic cord, which is connected to one of the carriages that support the movable wing of the sliding door.

In case of an anomaly of the system, which is reported immediately by the electronic panel, such panel disconnects the motor, allowing the elastic cord to release, thus moving the leaf toward the open position.

A last type of known solution that is used to move the wings of sliding doors is the so-called redundant system.

In this solution, if an abnormal operation of the system is detected, there must always be an alternative mode (secondary path) for opening the wings.

As disclosed in DE19913996, the simplest manner to ensure this behavior is to duplicate the electronic control components of the system, with consequent duplication also of the controlled operating elements, and to provide a power source that is alternative to mains voltage, such as for example batteries.

In case of an anomaly of the main system, detected by means of a cross-check at predefined time intervals between the two electronic panels, the auxiliary system intervenes, performs an opening maneuver, and keeps the system in this condition until the emergency condition ceases.

Since the solution described above entails a significant increase in the costs of the components and increases the complexity of the installation of the automation unit, various studies have been conducted in order to try to simplify the system and make it at the same time cheaper.

These studies have led to various solutions that are currently adopted; for example, one of them consists in manufacturing the traction system of the automation unit by always using two motors, which are however connected together by means of an elastic coupling between the shafts, so as to be able to use a single reduction unit.

The windings of the individual motors are controlled electrically by two distinct electronic circuits, which manage their operation; further, a series of batteries ensures, if the electric mains supply fails, the operation of at least one of the two motors.

A solution that is alternative to the preceding one is disclosed in W0200191271, which proposes to wind around a single motion transmission shaft two individual rotor windings: a "primary" one, which is supplied with power during normal operation of the system, and a "secondary" one, which is supplied with power by means of batteries and is activated in case of system anomaly.

These two windings are arranged side by side along the axis of the shaft and are contained within a single stator body.

In this case also, the windings are controlled by two distinct electronic circuits and a series of batteries ensures, in case of incorrect operation of the system, the intervention of at least one of the two windings.

In the two last solutions described above, a situation of abnormal operation of one of the two windings is detected immediately by the "supervisor" electronic circuit, which disconnects it and performs the opening maneuver by means of the other motor.

In EP 1 193 843 A1, a commutator motor for vacuum cleaners or electric power tools is disclosed that has two, AC or DC energizable, concentric, rotor coils, provided by an inner winding and, respectively, by an outer winding. The inner and outer windings have each specific and mutually different features to make them suitable to operate one with AC power and one with DC power.

These known types of solution are not free from drawbacks, which include the fact that they are not simultaneously low in cost, compact in size, simple to install and as much as possible fault-free.

### Disclosure of the Invention

The aim of the present invention is to eliminate the above-mentioned drawbacks, by providing a direct-current electric motor that allows to operate the leaf of the door in all circumstances.

Within this aim, an object of the present invention is to provide a direct-current electric motor that is simultaneously low in cost, compact in size, simple to install and as much as possible fault-free.

This aim, as well as these and other objects that will become better apparent hereinafter, are achieved by a direct-current electric motor, according to the present invention, that has the features set forth in claim 1.

### Brief description of the drawings

Further characteristics and advantages of the present invention will become better apparent from the following detailed description of a preferred but not exclusive embodiment of a direct-current electric motor, particularly for operating automatic sliding doors, according to the invention, illustrated by way of non-limiting example in the accompanying drawings, wherein:

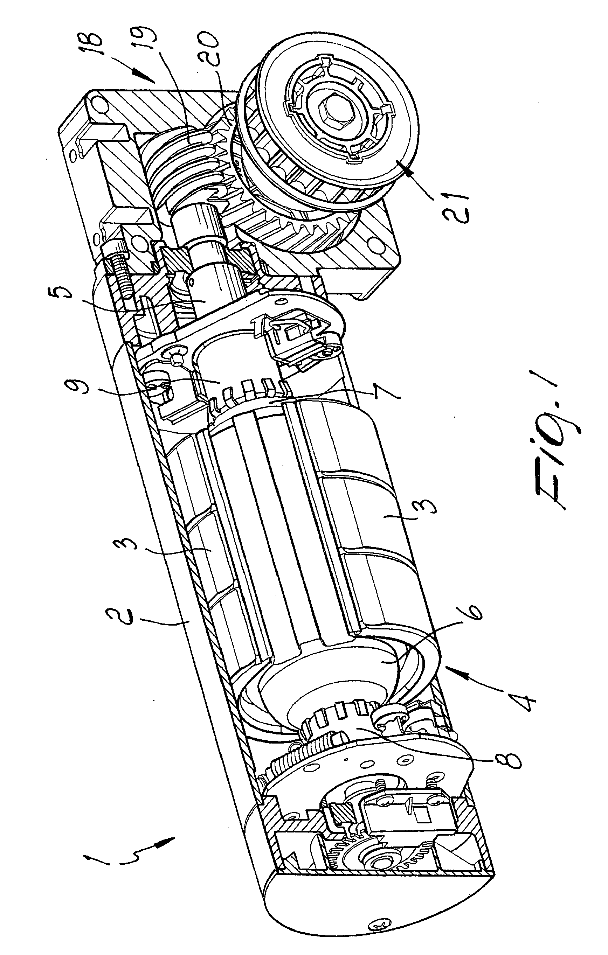

Figure 1 is a partially sectional perspective view of an embodiment of a direct-current electric motor, particularly for operating automatic sliding doors, according to the present invention;

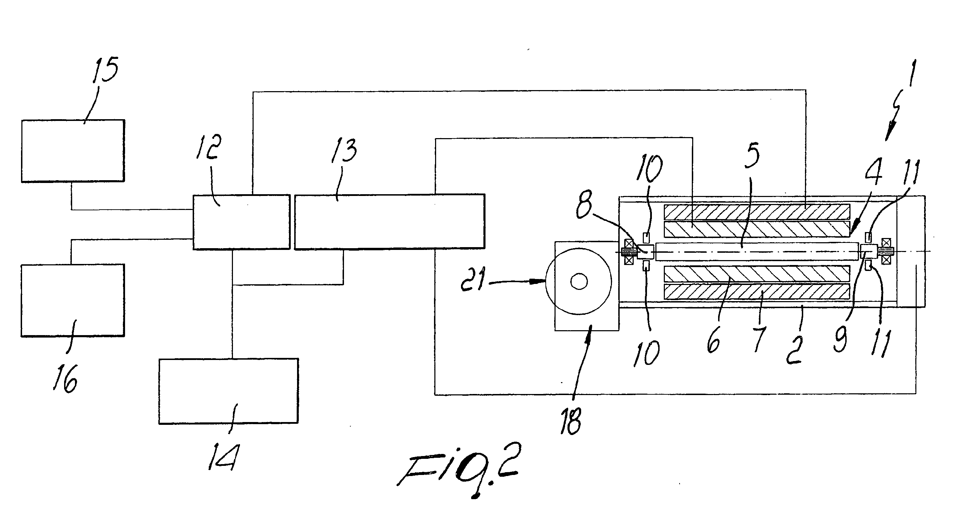

Figure 2 is an electrical diagram of the system for the management and power supply of the electric motor shown in Figure 1.

### Ways of carrying out the Invention

With reference to the figures, a direct-current electric motor particularly for operating automatic sliding doors, generally designated by the reference numeral 1, comprises a single stator body 2, which is cylindrical and supports permanent magnets 3 arranged on the internal cylindrical surface of the stator body 2.

A rotor 4 is accommodated within the stator body 2 and is constituted by a single driving shaft 5, around which a first winding 6 and a second winding 7 are wound and are inserted within the group of permanent magnets 3.

More precisely, according to the invention the first and second windings 6 and 7 are concentric, superimposed and electrically insulated with respect to each other for their connection respectively to a first power unit and to a second power unit for their independent actuation.

The two windings 6 and 7 in fact are connected respectively to two distinct collectors 8 and 9 arranged in contact with separate brushes 10 and 11, which are arranged at the two ends of the driving shaft 5 for the flow of electric current depending on the power unit that is active.

The electric motor 1 is in fact structured electrically so as to form two distinct electrical circuits, which are controlled and managed by electric control means, which comprise two electric circuits 12 and 13, one for each one of the windings 6 and 7.

More precisely, the two electric circuits 12 and 13 are both connected to a battery 14 that forms the second power unit.

Differently, the first power unit can be formed by the electrical mains 15 of the site where the electric motor 1 is installed, so that if power fails, the battery 14 can supply power to the winding of interest for the automatic opening of a wing of the sliding door, not shown.

Of course, the two windings 6 and 7, in addition to operating independently of each other, operate alternately with respect to each other.

Energizing one of the windings in fact entails the opening of the electric circuit of the other one, so as to prevent the flow of current in the winding 6 or 7 that is not of interest.

The battery 14 and the part of the electrical system that is correlated with it are such as to be activated not only if an interruption of the electrical mains 15 occurs but also when an emergency switch 16 is pressed.

As regards the operation of the wing of the sliding door, means for mechanical transmission for the connection of the driving shaft 5 to the wing are provided.

More precisely, the mechanical transmission means comprise a mechanical reduction unit 18, which is constituted by a worm screw 19 that is jointly connected for rotation to the driving shaft 5, and a gear 20, with an axis that is substantially perpendicular to the axis of the driving shaft 5.

In this manner it is possible to convert the rotary motion of the driving shaft 5 into a linear motion of the wing of the sliding door.

More precisely, the gear 20 can be keyed on the same shaft as a pulley 21, which provides a belt drive or the like that is indeed adapted to produce the translational motion of the wing of the sliding door.

In practice it has been found that the direct-current electric motor, particularly for operating automatic sliding doors, according to the present invention, fully achieves the intended aim and objects, since it allows to operate the wing of the door in all circumstances, ensuring excellent reliability and at the same time ensuring a good degree of economy.

Another advantage of the electric motor according to the present invention is that it is extremely compact, since its two windings are concentric and superimposed instead of adjacent as in the background art, and this is very useful if one wishes to provide automatic doors for escape routes that provide for a single movable wing and therefore have limited dimensions.

Another advantage of the electric motor according to the present invention is that the extreme compactness leads to having rotary elements of small size, avoiding all those series of problems that are closely linked to imbalances and vibrations induced by the rotation of a mechanical part, affecting to a smaller extent the bearings that support the shaft and thus ensuring a longer durability of the system and greater quietness.

The direct-current electric motor, particularly for operating automatic sliding doors, thus conceived, is susceptible of numerous modifications and variations, all of which are within the scope of the appended claims.

The materials used, as well as the dimensions that constitute the individual components of the invention, may of course be more pertinent according to specific requirements.

The various means for performing certain different functions need not certainly coexist only in the illustrated embodiment but can be present per se in many embodiments, including ones that are not illustrated.

The characteristics indicated as advantageous, convenient or the like may also be omitted or be replaced with equivalents.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A direct-current electric motor, particularly for operating automatic sliding doors, comprising: a single stator body (2) that supports permanent magnets (3); a rotor (4) accommodated in said stator body (2) and constituted by a single driving shaft (5) around which a first winding (6) and a second winding (7) are wound, wherein said first winding (6) and said second winding (7) are concentric, superimposed and electrically insulated with respect to each other for their connection respectively to a first power unit (15) and a second power unit (14) for their independent actuation; two distinct collectors (8, 9) which are connected respectively to said first and second windings (6, 7), said two distinct collectors (8, 9) being arranged in contact with separate brushes (10, 11) for the flow of electric current respectively at the two ends of said single driving shaft (5); and electric control means for the independent management of said first and second windings (6, 7) that comprise two electric circuits (12, 13), one for each one of said first and second windings (6, 7),
**characterized in that** said first and second windings (6, 7) are both provided suitable to operate in direct-current, with said two electric circuits (12, 13) being both connected to the second power unit that is constituted by a battery (14), the first power unit being constituted by an electrical mains (15), said first and second windings (6, 7) being operatable alternately with respect to each other by alternate energizing of one and opening of the other of said two electric circuits (12, 13).

2. The electric motor according to claim 1, **characterized in that** it comprises mechanical transmission means for the connection of said driving shaft (5) to at least one wing of a sliding door.

3. The electric motor according to claim 2, **characterized in that** said mechanical transmission means comprise a mechanical reduction unit (18) for the conversion, by means of a belt drive or the like, of the rotary motion of said driving shaft (5) into a linear motion of said wing of said sliding door,

4. The electric motor according to any of the preceding claims, **characterized in that** it further comprises an emergency switch (16) for activating said battery (14) and the part of the electric system correlated therewith.

## Patentansprüche

1. Ein Gleichstrom-Elektromotor, insbesondere zum Betrieb von automatischen Schiebetüren, der Folgendes umfasst: einen einzigen Statorkörper (2), der Dauermagneten (3) trägt, einen Rotor (4), der in dem Statorkörper (2) untergebracht ist und der aus einer einzigen Antriebswelle (5) besteht, um die eine erste Wicklung (6) und eine zweite Wicklung (7) gewickelt sind, wobei die erste Wicklung (6) und die zweite Wicklung (7) konzentrisch, überlagert und voneinander elektrisch isoliert sind, zum Zwecke ihrer Verbindung zu einer ersten Stromversorgungseinheit (15) beziehungsweise einer zweiten Stromversorgungseinheit (14) für ihre unabhängige Aktivierung; zwei separate Kollektoren (8, 9), die mit der ersten beziehungsweise zweiten Wicklung (6, 7) verbunden sind, wobei die zwei separaten Kollektoren (8, 9) in Kontakt mit separaten Bürsten (10, 11) für das Durchleiten von elektrischem Strom jeweils an den zwei Enden der einzigen Antriebswelle (5) angeordnet sind; und elektrische Steuerungsmittel zur unabhängigen Verwaltung der ersten und der zweiten Wicklung (6, 7), die zwei elektrische Schaltkreise (12, 13) umfassen, einen für jede der ersten und der zweiten Wicklung (6, 7),
**dadurch gekennzeichnet, dass** sowohl die erste als auch die zweite Wicklung (6, 7) geeignet bereitgestellt sind, um mit Gleichstrom zu arbeiten, wobei die zwei elektrischen Schaltkreise (12, 13) beide mit der zweiten Stromversorgungseinheit verbunden sind, die aus einer Batterie (14) besteht, und die erste Stromversorgungseinheit aus einem elektrischen Netz (15) besteht, wobei die erste und die zweite Wicklung (6, 7) abwechselnd betätigt werden können, und zwar durch abwechselnde Erregung des einen und Öffnung des anderen der zwei elektrischen Schaltkreise (12, 13).

2. Der Elektromotor gemäß Anspruch 1, **dadurch gekennzeichnet, dass** er mechanische Übertragungsmittel für die Verbindung der Antriebswelle (5) mit mindestens einem Flügel einer Schiebetür umfasst.

3. Der Elektromotor gemäß Anspruch 2, **dadurch gekennzeichnet, dass** die mechanischen Übertragungsmittel eine mechanische Untersetzungseinheit (18) zur Umwandlung, mit Hilfe eines Riemenantriebs oder Ähnlichem, der Drehbewegung der Antriebswelle (5) in eine Linearbewegung des Flügels der Schiebetür umfassen.

4. Der Elektromotor gemäß einem beliebigen der obigen Ansprüche, **dadurch gekennzeichnet, dass** er weiter einen Notausschalter (16) zur Aktivierung der Batterie (14) und des damit zusammenhängenden Teils des elektrischen Systems umfasst.

## Revendications

1. Moteur électrique à courant continu, en particulier pour actionneur des portes coulissantes automatiques, comportant un unique corps (2) de stator qui supporte des aimants permanents (3), un rotor (4) logé dans ledit corps (2) de stator et constitué par un unique arbre d'entraînement (5) autour duquel sont enroulés un premier bobinage (6) et un second bobinage (7), ledit premier bobinage (6) et ledit second bobinage (7) étant concentriques, superposés et isolés électriquement l'un par rapport à l'autre pour leur connexion respectivement à une première source d'alimentation électrique (15) et à une seconde source d'alimentation électrique (14) pour leur excitation indépendante ; deux collecteurs distincts (8, 9) respectivement connectés auxdits premier et second bobinages (6, 7), lesdits deux collecteurs distincts (8, 9) étant disposés au contact de balais séparés (10, 11) pour le passage d'un courant électrique respectivement aux deux extrémités dudit unique arbre d'entraînement (5) ; et des moyens électriques de commande pour la prise en charge indépendante desdits premier et second bobinages (6, 7), qui comprennent deux circuits électriques (12, 13), un pour chacun desdits premier et second bobinages (6, 7),
**caractérisé en ce que** lesdits premier et second bobinages (6, 7) sont conçus l'un et l'autre pour pouvoir fonctionner avec un courant continu, lesdits deux circuits électriques (12, 13) étant l'un et l'autre connectés à la seconde source d'alimentation électrique qui est constituée par une batterie (14), la première source d'alimentation électrique étant constituée par du courant de secteur (15), et lesdits premier et second bobinages (6, 7) pouvant fonctionner d'une manière mutuellement alternée par la mise sous tension alternée de l'un et l'ouverture de l'autre desdits deux circuits électriques (12, 13).

2. Moteur électrique selon la revendication 1, **caractérisé en ce qu'**il comporte un moyen mécanique de transmission pour l'accouplement dudit arbre d'entraînement (5) avec au moins un vantail d'une porte coulissante.

3. Moteur électrique selon la revendication 2, **caractérisé en ce que** ledit moyen mécanique de transmission comprend un réducteur mécanique (18) pour la conversion, à l'aide d'une courroie d'entraînement ou autre, du mouvement de rotation dudit arbre d'entraînement (5) en mouvement linéaire dudit vantail de ladite porte coulissante.

4. Moteur électrique selon l'une quelconque des revendications précédentes, **caractérisé en ce qu'**il comporte en outre un commutateur de secours (16) pour activer ladite batterie (14) et la partie correspondante du système électrique.
